**Europäisches Patentamt**

(19) **European Patent Office**

**Office européen des brevets**

(11) Numéro de publication: **0 004 220**
**B1**

(12) # FASCICULE DE BREVET EUROPEEN

(45) Date de publication du fascicule de brevet: **14.10.81**

(51) Int. Cl.³: **F 24 J 3/02** //C03C27/02

(21) Numéro de dépôt: **79400112.3**

(22) Date de dépôt: **23.02.79**

(54) **Capteur d'énergie solaire.**

(30) Priorité: **07.03.78 FR 7806434**

(43) Date de publication de la demande:
**19.09.79 Bulletin 79/19**

(45) Mention de la délivrance du brevet:
**14.10.81 Bulletin 81/41**

(84) Etats Contractants Désignés:
**DE GB IT NL**

(56) Documents cités:
**US - A - 1 093 997**
**US - A - 3 023 389**

(73) Titulaire: **COMPAGNIE DES LAMPES**
**29, rue de Lisbonne**
**F-75008 Paris (FR)**

(72) Inventeur: **Mourier, Jean**
**"THOMSON-CSF" - SCPI 173, bld Haussmann**
**F-75360 Paris Cedex 08 (FR)**
Inventeur: **Scoarnec, Louis**
**"THOMSON-CSF" - SCPI 173, bld Haussmann**
**F-75360 Paris Cedex 08 (FR)**

(74) Mandataire: **Dubreuil, Annie et al,**
**"THOMSON-CSF" - SCPI 173, bld Haussmann**
**F-75360 Paris Cedex 08 (FR)**

Courier Press, Leamington Spa, England.

Capteur d'énergie solaire

La présente invention a pour objet un capteur d'énergie solaire qui comporte un tube métallique réalisant la captation de l'énergie solaire et une enveloppe transparente réalisant une isolation thermique par le vide du tube précédent.

Un capteur solaire, par exemple du type circuit fermé qui est notamment décrit dans la demande de brevet français EN 76.13002 publiée sous le N° 2 349 802, au nom de THOMSON-CSF et COMPAGNIE DES LAMPES, est constitué essentiellement par un tube contenant un liquide et comportant deux parties, appelées respectivement évaporateur et condenseur. Dans la partie évaporateur, le liquide se vaporise en absorbant l'énergie fournie par le rayonnement solaire; dans la seconde partie, placée au contact de l'élément à chauffer, le liquide se condense en libérant la chaleur précédemment emmagasinée. La première de ces deux parties est enfermée dans une enveloppe transparente, en verre par exemple, à des fins d'isolation thermique.

Pour réaliser le tube capteur, le calcul et l'expérience ont conduit la Demanderesse à choisir un tube en métal. En effet, la partie condenseur du capteur n'est, en général, pas utilisée directement mais par l'intermédiaire d'un échangeur de chaleur: le condenseur sert, par exemple, à réchauffer un fluide auxiliaire, circulant autour des condenseurs d'un ensemble de capteurs d'énergie solaire, dans l'échangeur de chaleur. Or la fixation à cet échangeur est plus facile, donc plus économique, lorsque le tube capteur est métallique: la fixation peut alors être réalisée aisément de façon parfaitement étanche par soudure, sertissage, filtage ou juxtaposition et serrage. De plus, la conductibilité thermique du métal est bonne, meilleure que celle du verre par exemple, et les échanges thermiques avec le fluide de 1'échangeur se trouvent améliorés. Par ailleurs, par rapport au verre, le métal présente le double avantage:
— d'être moins fragile et plus fiable;
— d'admettre plus facilement des dépôts de matériaux étrangers, par exemple des matériaux qui permettent d'absorber l'énergie solaire afin d'améliorer le rendement du capteur.

En ce qui concerne l'enveloppe permettant la mise sous vide de la partie évaporateur du capteur, elle doit être transparente et elle est réalisée de préférence en verre, pour des raisons notamment économiques.

Or l'enveloppe doit être fixée au tube capteur métallique, et il est connu que les fixations verre-métal présentent des difficultés technologiques de réalisation.

Il est connu par le brevet US-A-3023389 de fermer une enveloppe en verre contenant un composant avec un scellement verre-métal au moyen d'une soudure verre-métal dite orthogonale. Il faut cependant noter qu'un tel type de soudure devient pratiquement irréalisable en dehors de certaines dimensions des pièces verre-métal à assembler, la difficulté étant encore plus grande lorsqu'il s'agit de souder un tube métallique à une enveloppe en verre.

La présente invention a pour objet un capteur solaire dont l'agencement des pièces métalliques et des pièces en verre permet de pallier ces difficultés de soudure orthogonale verre-métal et permet de mettre en oeuvre une soudure du type Housekeeper.

Elle concerne plus précisemment un tel capteur d'énergie solaire comportant un tube métallique 4 réalisant la captation de l'énergie et une enveloppe en verre 3, placée autour d'au moins une partie du tube 4 et réalisant une isolation thermique de ce dernier, ce capteur étant caractérisé en ce qu'il comprend en outre: une bague 5 tubulaire et métallique dont le diamètre est supérieur à celui du tube 4 de façon à ce que la bague 5 puisse être placée autour de ce dernier; une pièce 2 en verre comportant deux parties, une première partie 21 tubulaire et sensiblement de même diamètre que celui de la bague 5 et une seconde partie 22, évasée dont l'extrémité a un diamètre sensiblement égal à celui de l'enveloppe 3, cette extrémité étant soudée à cette enveloppe en 12, la première partie 21 tubulaire étant soudée à la bague 5 au moyen d'une soudure 11 de type Housekeeper, et la bague 5 étant elle-même soudée en 10 au tube métallique 4.

D'autres objets, caractéristiques et résultat de l'invention ressortiront de la description suivante, illustrée par les dessins annexés qui représentent:
— la figure 1, un premier mode de réalisation du dispositif selon l'invention;
— la figure 2, un détail de la figure précédente;
— la figure 3, une variante de réalisation du dispositif selon l'invention.

Sur ces différentes figures, les mêmes références se rapportent aux mêmes éléments.

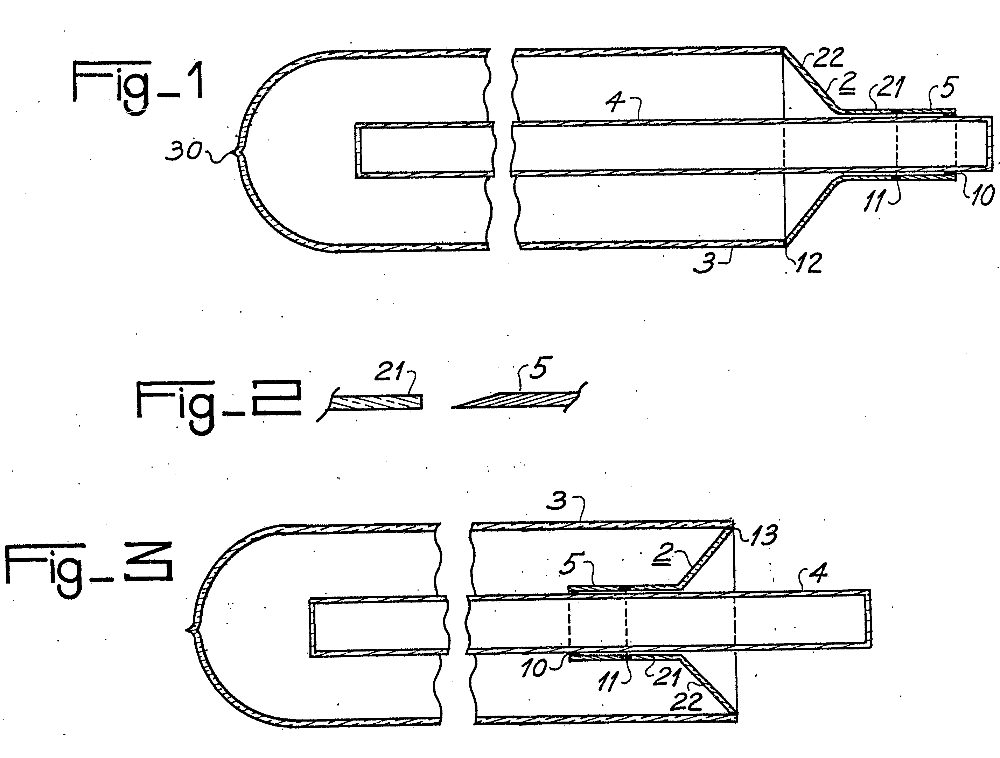

Sur la figure 1 sont représentés schématiquement:
— un tube métallique 4;
— une enveloppe transparente 3, en verre, sensiblement tubulaire dont une extrémité est réalisée en fond rond avec queusot 30 de pompage; cette enveloppe contient une partie du tube 4;
— une bague 5, tubulaire et métallique, dont le diamètre est supérieur à celui du tube 4 de façon à ce que la bague 5 puisse être placée autour de ce dernier;
— une pièce 2 en un matériau analogue à celui de l'enveloppe 3, c'est-à-dire en verre; cette pièce 2 comporte deux parties: une première partie 21 tubulaire et sensiblement de même diamètre que celui de la bague 5, et une second partie 22, évasée, dont l'extrémité a un diamètre sensiblement égal à celui de l'enveloppe 3.

La pièce 2 est obtenue par exemple de la façon suivante: on fabrique un tube de verre dont le diamètre est celui que l'on désire donner à la partie 21 de la pièce 2, et dont la longueur est supérieure à celle de cette pièce; l'évasement 22 est obtenu par formage à chaud de l'une des extrémités du tube de verre, jusqu'à ce que le diamètre extérieur maximum de cette pièce soit légèrement inférieur à celui de l'enveloppe 3.

La pièce 2 est placée au bout de l'enveloppe 3 et scellée sur cette dernière par l'extrémité de sa sortie 22; la jonction est repérée 12 sur la figure. Ce scellement peut être réalisé de toute façon connue, par exemple selon la technique qui consiste à introduire la pièce 2 légèrement à l'intérieur de l'enveloppe 3, puis à déformer, à l'aide ... d'un chalumeau, l'enveloppe 3 vers l'intérieur, au droit de la pièce 2, de façon qu'elle vienne au contact dernière réalisant ainsi le scellement; l'extrémité résiduelle de l'enveloppe 3 peut être ensuite coupée.

La pièce 2 est par ailleurs scellée sur la bague 5 par l'extrémité de sa partie 21 et la jonction est repérée 11 sur la figure. Un exemple de réalisation de cette jonction verre-métal est illustré sur la figure 2, où on a représenté une extrémité 21 de la pièce 2 et une extrémité de la bague 5; l'axe (non représenté) de la bague 5 se trouve alors au-dessus des deux éléments figurés. Il s'agit d'un scellement élastique du type "Housekeeper" et qui consiste à biseauter l'extrémité de la bague 5 de façon que le verre, c'est-à-dire la pièce 21, soit après scellement à l'intérieur de la bague 5. On peut également réaliser le scellement de façon que la partie 21 soit, après scellement, à cheval sur l'extrémité biseautée de la bague 5; le biseau peut être dans ce cas réalisé soit asymétriquement comme illustré par exemple sur la figure 2, soit symétriquement.

Enfin, l'autre extrémité de la bague 5 est soudée ou brasée sur le tube 4 (liaison 10 sur la figure 1), de sorte que l'extrémité de l'enveloppe 3 se trouve fixée de façon étanche au tube 4 par l'intermédiaire des pièces 2 et 5.

Dans le cas où le système décrit figure 1 est appliqué à la captation de l'énergie solaire, on utilise un tube 4 en acier inoxydable ou, de préférence, en cuivre, pour des raisons de conductibilité thermique; la bague 5 est alors de préférence également en acier inoxydable ou en cuivre. Le tube 4 est fermé hermétiquement à celle de ses extrémités qui est située l'inté-rieur de l'enveloppe 3, son autre extrémité étant ou non fermée selon le mode de fonctionnement (circuit ouvert ou circuit fermé type caloduc) choisi pour le capteur. L'extrémité extérieure du tube 4, ou bien la bague 5, peut être munie d'un filetage en vue d'une fixation de l'ensemble à un échangeur de chaleur ou, plus généralement, à un système d'utilisation.

Enfin, le centrage du tube 4 dans l'enveloppe 3 peut être facilité par des tiges métalliques s'appuyant par exemple sur l'enveloppe 3, au voisinage du queusot 30 par lequel on réalise le vide dans l'espace compris entre le tube 4 et l'enveloppe 3; ces tiges métalliques peuvent en outre remplir la fonction de support de getters.

La figure 3 représente une variante de réalisation du dispositif selon l'invention.

Sur cette figure, on retrouve le tube métallique 4, l'enveloppe en verre 3, la bague métallique 5 et la pièce en verre 2.

La bague 5 est comme précédemment placée autour du tube 4 et soudée (liaison 10) à ce dernier par l'une de ses extrémités.

Quant à la pièce 2, sa position est modifiée par rapport à la figure 1: elle est maintenant placée à l'intérieur de l'enveloppe 3. Comme précédemment, la partie 22 de cette pièce 2 est scellée sur l'enveloppe 3 (jonction 13) et la partie 21 sur la bague 5 (jonction 11).

En ce qui concerne la réalisation de ces scellements, celui qui porte la référence 11 peut être avantageusement réalisé comme précédemment et celui qui porte la référence 13, par exemple par la technique dite "butt seal". On rappelle que cette dernière technique consiste à faire tourner la pièce 2 ainsi que l'enveloppe 3, dont l'extrémité est chauffée et déformée vers l'intérieur, afin de former un collet venant appuyer sur l'extrémité de la partie 22 de la pièce 2, réalisant ainsi le scellement.

## Revendications

1. Capteur d'énergie solaire comportant un tube métallique (4) réalisant la captation de l'énergie et une enveloppe en verre (3), placée autour d'au moins une partie du tube (4) et réalisant une isolation thermique de ce dernier, ce capteur étant caractérisé en ce qu'il comprend en outre: une bague (5) tubulaire et métallique dont le diamètre est supérieur à celui du tube (4) de façon à ce que la bague (5) puisse être placée autour de ce dernier; une pièce (2) en verre comportant deux parties, une première partie (21) tubulaire et sensiblement de même diamètre que celui de la bague (5) et une seconde partie (22), évasée, dont l'extrémité a un diamètre sensiblement égal à celui de l'enveloppe (3), cette extrémité étant soudée à cette enveloppe en (12), la première partie (21) tubulaire étant soudée à la bague (5) au moyen d'une soudure (11) du type Housekeeper, et la bague (5) étant elle-même soudée en (10) au tube métallique (4).

2. Capteur selon la revendication 1, caractérisé en ce que celle des extrémités du tube métallique qui n'est pas enfermée dans l'enveloppe est munie d'un filetage.

## Patentansprüche

1. Sonnenenergiekollektor, welcher ein Metallrohr (4), das die Energie auffängt, und einen um mindestens einen Teil des Rohrs angeordneten Glasmantel (3), der dieses wärmeisoliert, aufweist, dadurch gekennzeichnet, daß er außerdem aufweist: einen rohrförmigen Metallring (5), dessen Durchmesser größer als der des Rohrs (4) ist, sodaß er um dieses angeordnet werden kann; und ein Glaselement (2), welches zwei Teile aufweist, einen ersten rohrförmigen Teil (21) von im wesentlichen gleichem Durchmesser wie der des Ringes (5) und einen zweiten, sich erweiternden Teil (22), dessen Ende einen Durchmesser im wesentlichen gleich dem des Mantels (3) hat und an diesem Mantel bei (12) angeschmolzen ist, wobei der erste rohrförmige Teil (21) am Ring (5) mittels einer elastischen Schmelz- oder Klebverbindung (11) vom Typ "Housekeeper" versiegelt und der Ring (5) selbst am Metallrohr (4) bei (10) angeschweißt oder angelötet ist.

2. Sonnenenergiekollektor nach Anspruch 1, dadurch gekennzeichnet, daß dasjenige der Enden des Metallrohres, das nicht im Mantel eingeschlossen ist, mit einem Gewinde versehen ist.

## Claims

1. Collector of solar energy comprising a metallic tube (4) for collecting the energy, and a jacket (3) of glass placed around at least a part of said tube (4) and forming a thermal insulation of the latter, said collector being characterized in that it further comprises: a tubular metallic ring (5) having a diameter greater than that of the tube (4) so that the ring (5) can be placed around the latter; an element of glass comprising two parts, a first tubular part (21) of essentially the same diameter as that of the ring (5), and a second flared part (22) the end of which has a diameter essentially equal to that of said jacket (3) this end being sealed (fused) to this jacket at (12), the first tubular part (21) being sealed to said ring (5) by means of a seal of the type "housekeeper", and the ring (5) being itself welded or soldered at (10) to the metallic tube (4).

2. Collector according to claim 1, characterised in that that end of said metallic tube which is not enclosed in said jacket is provided with a thread.

Fig-1

Fig-2